Europäisches Patentamt

European Patent Office

Office européen des brevets

(19)

(11) Veröffentlichungsnummer : **0 044 399**
**B2**

(12) # NEUE EUROPÄISCHE PATENTSCHRIFT

(45) Veröffentlichungstag der neuen Patentschriff :
11.01.89

(21) Anmeldenummer : 81104265.4

(22) Anmeldetag : 03.06.81

(51) Int. Cl.⁴ : **C 08 F220/12**, C 08 F212/00,
C 08 F222/14, C 09 D   5/02 //
(C08F220/12, 212:00,
220:04),(C08F212/00, 220:12,
222:14, 220:04),(C08F222/14,
212:00, 220:04)

(54) **Bindemittellösung für wasserverdünnbare, physiklaisch trocknende Zusammensetzungen.**

(30) Priorität : 19.06.80 DE 3022824

(43) Veröffentlichungstag der Anmeldung :
27.01.82 Patentblatt 82/04

(45) Bekanntmachung des Hinweises auf die Patenterteilung : 04.12.85 Patentblatt 85/49

(45) Bekanntmachung des Hinweises auf die Entscheidung über den Einspruch : 11.01.89 Patentblatt 89/02

(84) Benannte Vertragsstaaten :
BE DE FR GB IT NL SE

(56) Entgegenhaltungen :
DE--A-- 2 004 753
DE--A-- 2 407 159
FR--A-- 1 384 246
Chem. Abstr. 89, 148292 (1978)

(73) Patentinhaber : **BASF Aktiengesellschaft**
**Carl-Bosch-Strasse 38**
**D-6700 Ludwigshafen (DE)**

(72) Erfinder : **Dersch, Rolf, Dr.**
**Seckenheimer Strasse 11-13**
**D-6800 Mannheim (DE)**  ·
Erfinder : **Loch, Werner, Dr.**
**In der Bleiche 2**
**D-6701 Erpolzheim (DE)**
Erfinder : **Neubert, Gerhard, Dr.**
**Panoramastrasse 11**
**D-6719 Battenberg (DE)**
Erfinder : **Wistuba, Eckehardt, Dr.**
**Im Obergarten 7**
**D-6702 Bad Duerkheim (DE)**

EP 0 044 399 B2

## Beschreibung

Die vorliegende Erfindung betrifft eine Bindemittellösung für wasserverdünnbare, physikalisch trocknende Zusammensetzungen, insbesondere für Anstrichstoffe und Imprägniermittel nach DIN 55 945 mit besonders geringer Wasserquellbarkeit.

Es ist bekannt, Anstrichstoffe auf Basis von Polymerisatharzen durch Einbau saurer Gruppen, die in der Regel mit flüchtigen organischen Aminen in Salzgruppen überführt werden, wasserverdünnbar zu machen. Die Anwesenheit dieser Salzgruppen in Bindemitteln des bekannten Standes der Technik bedingt jedoch, daß die damit erhaltenen Anstriche so wasserempfindlich bleiben, daß sie bei Beanspruchung durch Feuchtigkeit relativ hohe Mengen Wasser aufnehmen und beispielsweise für den Schutz von Bauten und Konstruktionsteilen gegen atmosphärische Einflüsse, wie insbesondere für den Korrosionsschutz von Stahl und anderen Metallen wenig oder gar nicht geeignet sind.

So werden in der FR-PS 1 384 246 thermoplastische Copolymerisate für physikalisch trocknende Schutzüberzüge auf der Basis von Acrylsäureestern beschrieben, die sich nach Neutralisation der einpolymerisierten Monocarbonsäuren mit Aminen bzw. Ammoniak in Wasser bzw. Mischungen von organischen Lösungsmitteln mit Wasser lösen lassen. Schutzüberzüge, die aus diesen Lösungen hergestellt werden, sind zwar gegen Anlösung durch Wasser beständig ; sie quellen jedoch bei langzeitiger Beanspruchung durch Wasser so stark, daß sie als alleinige Korrosionsschutzüberzüge gegen Wettereinflüsse nicht in Frage kommen. Außerdem macht die leichte Ablösbarkeit derartiger Überzüge bereits durch schwache wäßrige Basen, wie wäßriger Ammoniak, die Anwendung dieser Copolymerisate als Bindemittel für physikalisch trocknende Korrosionsschutzbeschichtungen ungeeignet.

Um in solchen Fällen dennoch wasserresistente Anstriche zu erhalten, muß man hitzereaktive Vernetzer, wie z. B. Aminoplast- oder Epoxidharze zusetzen, die jedoch Härtungstemperaturen von über 70 °C erfordern. Derartige Einbrennlacke sind beispielsweise in der CA-PS 998 790 beschrieben. Abmischungen mit Epoxidharzen andererseits sind begrenzt lagerfähig und lassen sich nur als 2-Komponentenlacke verarbeiten.

Wasserfestigkeit bei Raumtemperatur kann bestenfalls erreicht werden, wenn die salzgruppenreichen Bindemittel oxidativ vernetzbare Gruppierungen, wie z. B. Fettsäuren natürlich vorkommender trocknender Öle eingebaut enthalten. Derartige Anstrichmittel sind beispielsweise in der JA-OS 2 081 344 sowie der FR-PS 1 596 677 beschrieben. Wie aus letzterer hervorgeht, haben solche Anstrichmittel sehr lange Trocknungszeiten. Außerdem altern, verspröden und vergilben die resultierenden Anstriche bekanntermaßen schnell unter Hitze und Witterungseinfluß. Hinzu kommen die für die oxidativ trocknenden Bindemittel bekannten weiteren nachteiligen Eigenschaften, wie Hautbildung in angebrochenen Gebinden, Hochziehen der Anstriche beim Überstreichen, Unlöslichkeit der angetrockneten Anstriche und ungenügende Beständigkeit gegen verseifende Chemikalien.

Um die letztgenannten Nachteile sowie hohe Härtungstemperaturen zu umgehen, bleibt die physikalische Trocknung von Emulsionspolymerisaten. Bei diesen findet Filmbildung bei Raumtemperatur durch Verschweißen der emulgierten kugeligen weichen Polymerteilchen während der fortschreitenden Konzentrierung durch Wasserverdunstung statt. Dadurch ergeben sich jedoch Nachteile. Zur Verfilmung ist eine Mindestfilmbildetemperatur erforderlich. Die Lackfilme bleiben relativ weich und wenig blockfest, und es ist schwierig, hochglänzende Überzüge zu erhalten. Hinzu kommt, daß Anstriche aus Emulsionspolymerisaten bekanntermaßen aufgrund ihres Gehaltes an Emulgatoren und weiterer wasserlöslicher Hilfsstoffe, die für die Lagerstabilität dieser Anstrichstoffe meist erforderlich sind, wie Verdickungs- und Pigmentdispergiermittel, eine starke Wasserquellbarkeit zurückbehalten. Ihre Anstriche bieten daher nur einen eingeschränkten Schutz gegen atmosphärische Einflüsse.

Der vorliegenden Erfindung lag nun die Aufgabe zugrunde, ein Bindemittellosung aufzuzeigen, die für bei Raumtemperatur physikalisch trocknende, wasserverdünnbare Anstrichstoffe und Imprägniermittel zu verwenden ist, die frei von den Nachteilen des oben zitierten Standes der Technik ist.

Gegenstand der vorliegenden Erfindung ist eine wasserverdünnbare Bindemittellösung, erhältlich durch Lösen eines carboxylgryuppenhaltigen Copolymerisates in mit Wasser zumindest teilweise mischbarem organischen Lösungsmittel und zumindest teilweiser Neutralisation mit Ammoniak, wobei das Copolymerisat im wesentlichen aus

a) 31 bis 64 Gew.-% mindestens eines Vinylaromaten,

b) 24 bis 65 Gew.-% mindestens eines carboxylgruppenfreien Esters einer α,β-ethylenisch ungesättigten, 3 bis 5 Kohlenstoffatome enthaltenden Mono- oder Dicarbonsäure mit einem 1 bis 14 Kohlenstoffatome enthaltenden, verzweigten oder geradkettigen Monoalkanol,

c) 4 bis 30 Gew.-% mindestens einer carboxylgruppenhaltigen, α,β-ethylenisch ungesättigten Verbindung mit 3 bis 14 Kohlenstoffatomen und

d) 0 bis 5 Gew.-% weiterer, unter a) bis c) nicht genannter α,β-ethylenisch ungesättigter Verbindungen,

mit der Maßgabe, daß die Summe der unter a) bis d) genannten Prozentzahlen gleich 100 ist, das dadurch gekennzeichnet ist, daß das Copolymerisat einen K-Wert (nach Fikentscher) von 18 bis 60 aufweist und die Komponenten a), b), c) und d) in einem solchen Verhältnis einpolymerisiert enthält, daß dem

2

Copolymerisat ein A-Wert zwischen 180 und 220 entspricht, wobei der A-Wert sich aus folgender Gleichung berechnen läßt :

$$100 \cdot \log SZ + 1,6 \cdot \sum_{i=1}^{n} E_i = A$$

worin SZ die Säurezahl in mg KOH/g Copolymerisat und

$$\sum_{i=1}^{n} E_i$$

die Summe der korrigierten Anteile $E_1$ bis $E_n$ der jeweiligen Alkyl(Meth)Acrylatcomonomere b) 1 bis b) n an COO-Gruppierungen, jeweils in Gew.-%, bezogen auf das Copolymerisat, bedeuten und diese Gew.-%-Anteile so korrigiert werden, daß sie für Ester in $\alpha$-Stellung verzweigter Alkanole mit dem Faktor 0,7 bzw. für Ester in $\beta$-Stellung verzweigter Alkanole mit dem Faktor 0,8 multipliziert worden sind.

Gegenstand der vorliegenden « Erfindung ist außerdem die Verwendung der erfindungsgemäßen Bindemittellösung fur wässerverdünnbare, physikalish trocknende Zusammensetzungen, insbesondere für Anstrichstoffe und Imprägnierungen, wobei ein Copolymerisat in mit Wasser zumindest teilweise mischbaren organischen Lösungsmitteln gelöst und mit Ammoniak zumindest teilweise neutralisiert ist. Die Copolymerisate können im allgemeinen Säurezahlen zwischen etwa 30 und 120 aufweisen.

Mit der erfindungsgemäßen Bindemittellösung lassen sich Anstrichstoffe une Imprägniermittel herstellen, die beliebig oder zumindest mit hohen Anteilen wasserverdünnbar sind, wobei das Stadium der kolloidalen Lösung praktisch nie verlassen wird. Die mit diesen Überzugsmitteln erhaltenen Anstriche sind schon unmittelbar nach dem Antrocknen bei gewöhnlichen Innen- und Außentemperaturen wasserabweisend und gegen Wassereinwirkung beständig.

Nach Durchtrocknung entstehen Lackfilme, die sich im Gegensatz zu den mit organischen Aminen neutralisierten Copolymerisaten durch überraschend geringe Wasserquellbarkeit auszeichnen, wie sie sonst nur von organisch löslichen Bindemitteln bekannt ist.

Es war außerdem überraschend, daß die Copolymerisate sich in wäßrig ammoniakalischem Isopropanol lösen lassen, obwohl sie in Isopropanol allein bei 20 °C im allgemeinen nicht oder nur unvollständig löslich sind. Die Eignung von Ammoniak als Neutralisationsmittel bringt zudem den Vorteil, daß Ammoniak im Gegensatz zu organischen Aminen keine toxikologischen Probleme verursacht.

Die durchgetrockneten Lackfilme zeichnen sich überdies durch ausgezeichnete Beständigkeit gegen wäßrige Basen aus, z. B. gegen langzeitige Einwirkung von wäßrigem Ammoniak oder 1-normaler Natronlauge bei Raumtemperatur.

Die aus der erfindungsgemäßen Bindemittellösung hergestellten Anstrichstoffe sind langzeitig lagerfähig, problemlos miteinander überlackierbar und auch auf nassen Untergründen noch anwendbar. Mit ihnen erhaltene Anstriche zeichnen sich durch gute Witterungsbeständigkeit, hohe Hitzestabilität, gute Haftfestigkeit auf verschiedenen Untergründen sowie gute mechanische Eigenschaften trotz niedrigem K-Wert aus Sie gewährleisten daher einen ausgezeichneten Schutz für Bauten und Konstruktionsteile aus Metallen sowie organischen und mineralischen Materialien gegen Korrosion. In den erfindungsgemäßen Überzugsmitteln liegt optimale Pigmentbenetzung vor, so daß hochglänzende Anstriche erhalten werden. Das ist ein bedeutender Fortschritt gegenüber herkömmlichen Dispersionsfarben.

Darüber hinaus ermöglichen diese Bindemittel lösungen den Anteil an organischen Lösungs- und Verdünnungsmitteln zu physikalisch trocknenden Anstrichstoffen beträchtlich zu reduzieren. Dadurch lassen sich Kosten einsparen, die Belastung der Umwelt durch Lösungsmittel verringern und die Handhabung der Anstrichstoffe ungefährlicher einstufen.

Zu den Aufbaukomponenten des Copolymerisats ist forgendes auszuführen :

a) Als Vinylaromaten eignen sich z. B. Vinyltoluol und vorzugsweise Styrol. Komponente (a) ist im erfindungsgemäßen Copolymerisat in einer Menge von 31 bis 64, vorzugsweise 35 bis 55, insbesondere 40 bis 50 Gew.-% einpolymerisiert.

b) Als carboxylgruppenfreie Ester einer $\alpha,\beta$-ethylenisch ungesättigten, 3 bis 5 Kohlenstoffatome enthaltenden Mono- der Dicarbonsäure mit einem 1 bis 14 Kohlenstoffatome enthaltenden Monoalkanol eignen sich z. B. entsprechende Ester der Acrylsäure, Methacrylsäure, Maleinsäure und Fumarsäure, wie z. B. Methylacrylat, Methylmethacrylat, n-Butylacrylat, n-Butylmethacrylat, Isobutylacrylat, Isobutylmethacrylat, tert.-Butylacrylat, 2-Ethylhexylacrylat, Laurylacrylat, Maleinsäuredibutylester, sowie deren Gemische. Bevorzugt sind jedoch $C_4$- bis $C_{14}$-geradkettige und verzweigte Alkanol-Acrylsäureester, insbesondere n-Butylacrylat, Isobutylacrylat und 2-Ethylhexylacrylat.

Komponente (b) ist im erfindungsgemäßen Copolymerisat in Mengen von 24 bis 65, vorzugsweise 30 bis 45 Gew.-% einpolymerisiert.

c) Als carboxylgruppenhaltige $\alpha,\beta$-ethylenisch ungesättigte Verbindungen mit 3 bis 14, vorzugsweise

3

3 bis 8 Kohlenstoffatomen eignen sich beispielsweise Acrylsäure, Methacrylsäure, Crotonsäure, Maleinsäure, Fumarsäure, Itaconsäure sowie Dicarbonsäurehalbester, wie Mono-n-Butylmaleinat, Mono-n-Butylfumarat, Mono-2-Ethylhexylmaleinat, Mono-2-Ethylhexylfumarat, sowie deren Gemische. Bevorzugt ist jedoch Acrylsäure. Komponente (c) ist im Copolymerisat in solchen Mengen einpolymerisiert, daß Säurezahlen zwischen 30 und 120, vorzugsweise zwischen 39 und 80 entstehen.

d) Bei der Komponente (d) handelt es sich um weitere α,β-ethylenisch ungesättigte Verbindungen, die nicht unter a) bis c) genannt sind und gegebenenfalls in Mengen bis zu 5 Gew.-% im Copolymerisat einpolymerisiert sein können. Es sind dies beispielsweise Mono(meth)-acrylate von Alkandiolen, wie Hydroxyethyl- und Hydroxypropyl(meth)acrylat sowie Butandiolmono(meth)acrylat, (Meth)acrylamid, (Meth)acrylnitril und/oder Vinylester, wie Vinylacetat, Vinylpropionat und Vinylpivalat. Diese Monomeren dienen, falls erforderlich, zur Einstellung spezieller Eigenschaften. Die Verwendung von Copolymerisaten ohne Komponente (d) wird im allgemeinen bevorzugt.

Die Summe der unter a) bis d) genannten Prozentzahlen ist 100.

Erfindungsgemäß weist das Copolymerisat einen K-Wert (nach Fikentscher) von 18 bis 60, vorzugsweise 20 bis 40, insbesondere 24 bis 32 auf und enthält die Komponenten a), b), c) und d) in einem solchen Verhältnis einpolymerisiert, daß dem Copolymerisat ein A-Wert zwischen 180 und 220, vorzugsweise 190 bis 210 sowie 195 bis 217, insbesondere 195 bis 205, entspricht, wobei der A-Wert sich aus folgender Gleichung berechnen läßt :

$$100 \cdot \log SZ + 1{,}6 \cdot \sum_{i=1}^{n} E_i = A$$

worin SZ die Säurezahl in mg KOH/g Copolymerisat und

$$\sum_{i=1}^{n} E_i$$

die Summe der korrigierten Anteile $E_1$ bis $E_n$ der jeweiligen Alkyl(Meth)Acrylatcomonomere b) 1 bis b) n an COO-Gruppierungen, jeweils in Gew.-%, bezogen auf das Copolymerisat, bedeuten und die Gew.-%-Anteile so korrigiert werden, daß sie für Ester in α-Stellung verzweigter Alkanole mit dem Faktor 0,7 bzw. für Ester in β-Stellung verzweigter Alkanole mit dem Faktor 0,8 multipliziert worden sind.

Soweit die Ester der Acryl- oder Methacrylsäure nur Monoalkohole mit 1 bis 14 Kohlenstoffatomen enthalten, die nicht in α- oder β-Stellung verzweigt sind, wird der Wert E unverändert eingesetzt.

Für den Anteil an Estergruppen, die in α- oder β-Stellung zur Estergruppierung Kettenverzweigung aufweisen, erniedrigt er sich, und zwar für in α-Stellung verzweigte Alkanolester (z. B. tert.-Butylacrylat) um 30 % und für in β-Stellung verzweigte Alkanolester (z. B. Isobutyl-(meth)acrylat und 2-Ethylhexylacrylat) um 20 %.

Für den Estergruppenanteil von in α-Stellung verzweigten Alkanolestern, z. B. tert.-Butylacrylat, des Copolymeren ist somit der Betrag

$$E = \frac{\text{Gew.-\% COO-Esteranteil}}{100} \cdot 70$$

einzusetzen. Entsprechend ist für in β-Stellung verzweigte Alkanolester, z. B. für Isobutylmethacrylat bzw. Isobutylacrylat und 2-Ethylhexylacrylat

$$E = \frac{\text{Gew.-\% COO-Esteranteil}}{100} \cdot 80$$

Bei höheren Werten im Bereich für A, z. B. über 220, erhält man weniger wasserbeständige Filme (hohe Wasseraufnahme, starke Wasserquellbarkeit, schlechter Korrisonsschutz), bei niedrigeren Werten im Bereich von A, z. B. unter 190, eine deutlich eingeschränkte Wasserverdünnbarkeit (Flockung, Entstehung instabiler Dispersionen, Zweiphasenbildung) bei der Verwendung der erfindungsgemäßen Copolymerisats für Anstrichstoffe.

Ebenso ist die Wasserverdünnbarkeit bei höheren K-Werten (> 40) deutlich geringer. Außerdem werden dann größere Anteile hochsiedender Lösungsmittel zur Filmbildung benötigt.

Das Copolymerisat kann im allgemeinen Erweichungspunkte nach DIN 53 180 von z. B. 55 bis 160, vorzugsweise 65 bis 130, insbesondere 75 bis 110 °C aufweisen.

Das Copolymerisat läßt sich auf übliche Weise herstellen, bevorzugt durch Substanz- oder Lösungspolymerisation. Weniger geeignet sind die Suspensions- oder Emulsionspolymerisation, weil dann der gleichmäßige Einbau der Komponente (c) erschwert ist.

Als mit Wasser zumindest teilweise mischbare organische Lösungsmittel für die Copolymerisate

eignen sich z. B. Monoalkanole mit 1 bis 4 Kohlenstoffatomen und/oder Oxamonoalkanole mit 3 bis 8, vorzugsweise 5 bis 6 Kohlenstoffatomen. Bevorzugte Lösungsmittel sind z. B. Ethanol, Propanole, Butanole, Monoether des Ethylenglykols, Propylenglykols, der Butandiole und des Diethylenglykols mit Methanol, Ethanol, Propanolen und Butanolen, sowie Gemische dieser Lösungsmittel.

Außerdem eignen sich die Diether des Diethylenglykols mit Methanol und Ethanol sowie N-Methylpyrrolidon.

Ketone, wie Aceton oder Diacetonalkohol sind wegen ihrer Reaktivität gegenüber Ammoniak, und Ester, wie z. B. Methylglykolacetat, wegen ihrer begrenzten Verseifungsbeständigkeit ungeeignet bzw. weniger geeignet.

Teilweise mit Wasser mischbare Lösungsmittel werden entsprechend ihrer Mischbarkeit mit Wasser nur anteilweise im Lösungsmittel mitverwendet.

Mit Wasser nicht mischbare Lösungsmittel, wie z. B. Toluol und Xylol beeinträchtigen die Wasserverdünnbarkeit der erfindungsgemäßen Bindemittellösungen beträchtlich. Sie werden daher höchstens anteilweise mitverwendet. Ein Zusatz ist daher weniger empfehlenswert.

Bevorzugte Lösungsmittel sind Ethanol, Isopropanol, sec.-Butanol und Ethylenglykolmonobutylether, außerdem Mischungen aus hochsiedenden Alkyl-Glykoläthern mit Verdungstungszahlen nach DIN 53 170 zwischen 60 und 600, vorzugsweise 100 bis 300, wie z. B. Butylglykol, mit Isopropanol und/oder teilweise mit Wasser mischbaren Alkoholen.

Die hochsiedenden, mit Wasser verdünnbaren Lösungsmittel werden zweckmäßigerweise in Mengen von 10 bis 100, vorzugsweise 20 bis 60 Gew.-%, bezogen auf Copolymerisat, verwendet, wenn mehr als 20 % Wasser im Lösungsmittelgemisch enthalten sind (bzw. etwa 10 bis 25 Gew.-% Butylglykol, bezogen auf den Wasseranteil).

Für die erfindungsgemäße Verwendung der Bindemittellösung für wasserverdünnbare Anstrichstoffe und Imprägniermittel wird das Copolymerisat mit zweckmäßig 25 oder mehr, vorzugsweise 50 bis 200 Gew.-%, bezogen auf Copolymerisat, des mit Wasser mindest teilweise mischbaren organischen Lösungsmittels kombiniert.

In der Bindemittellösung kann Wasser in Mengen von bis zu 1 000, vorzugsweise 50 bis 200 Gew.-%, bezogen auf Copolymerisat, mitverwendet werden.

Als Neutralisationsmittel dient Ammoniak, von dem jedoch — zur Erzielung bestimmter Effekte — ein geringer Teil, zweckmäßig nicht mehr als 25 %, vorzugsweise nicht mehr als 10 %, des für die Neutralisation erforderlichen Ammoniaks, durch organische Amine, insbesondere Triethylamin ersetzt werden kann. Solche Zusätze erhöhen jedoch die Wasserquellbarkeit und die Wasserdurchlässigkeit der Anstriche.

Der pH-Wert der wäßrigen Bindemittellösung ist am allgemeinen > 7,0 ; vorzugsweise zwischen 7,5 und 9,5 ; insbesondere 8,0 bis 9,0.

Außerdem können für die erfindungsgemäße Verwendung in der Lacktechnologie übliche Hilfs- und Zusatzstoffe mitverwendet werden, beispielsweise Pigmente und Füllstoffe, wie Titandioxid, Eisenoxide, Chromoxide, Schwermetallchromate, Bariumsulfat, Ruß, Calcite, Dolomit, Talkum, Aluminiumbronze und organische Pigmente, andere in der Lacktechnologie übliche Hilfsstoffe, wie beispielsweise Entschäumer, Netzmittel, Antiabsetz- bzw. Thixotropiermittel, Verdicker, Gleitmittel und Weichmacher.

Die Copolymerisate werden bevorzugt als alleinige Bindemittel zur Herstellung von Anstrichstoffen und ähnlichen Beschichtungsstoffen angewendet. Sie können aber auch mit anderen bekannten Bindemitteln kombiniert werden, wie z. B. wäßrigen Styrol/Acrylatpolymer-Dispersionen, beispielsweise, um die Eigenschaffen der bekannten Anstrichstoffe in die eine oder andere Richtung abzuwandeln.

Zur Herstellung von Anstrichstoffen und Imprägniermitteln unter Verwendung des Copolymerisats, kann es, wenn durch Substanzpolymerisation erhalten, in einem der obengenannten organischen Lösungsmittel, gegebenenfalls unter Erwärmen, gelöst, anschließend mit Ammoniakwasser neutralisiert und mit Wasser sowie gegebenenfalls weiterem organischen Lösungsmittel verdünnt werden. Schneller auflösbar ist das Copolymerisat jedoch im allgemeinen in Mischungen aus organischem Lösungsmittel, Wasser und Ammoniak. Ein anderer Weg besteht in der Herstellung des Copolymerisats durch Lösungspolymerisation, wobei als Reaktionsmedium entweder organische Lösungsmittel der obengenannten Art oder Gemische derselben mit Wasser und Ammoniak geeignet sind. Anschließend erfolgt Verdünnung mit Wasser sowie gegebenenfalls mit einem der oben beschriebenen organischen Lösungsmittel.

Das Anreiben von Pigmenten und Füllstoffen wird in der organischen oder organisch wäßrigen Lösung des Copolymerisats vor oder nach der Neutralisation vorgenommen. Dabei kann zur Verbesserang der Pigmentdispersionen von Vorteil sein, wenn nur möglichst wenig Wasser zugegen ist.

Die Verarbeitung der unter Verwendung erfindungsgemäßer Bindemittellösungen erhaltenen Anstrichstoffe oder Imprägniermittel erfolgt nach üblichen Methoden, wie Streichen, Spritzen, Rollen, Gießen, Tauchen und Walzen.

Beispiele für die Anwendung der erfindungsgemäßen Produkte sind Klarlacke und pigmentierte Anstrichstoffe zum Schutz verschiedenartiger Substrate, wie z. B. von Stahl oder anderen Metallen, von Mauerwerk, Beton, Asbestzement, Holz und Kunststoffen gegen atmosphärische und andere Einflüsse. Andere Einsatzgebiete der erfindungsgemäßen Produkte sind

Verfestigung und Hydrophobierung saugender mineralischer Untergründe,
Kombinationsbindemittel für Dispersionsanstriche,
Verbesserung der Haftfestigkeit nachfolgender Anstriche und Beschichtungen,
Straßenmarkierungsfarben,
Beschichtungen von Teerpappe, Flachdächern und Dachziegeln.

Die erfindungsgemäßen Bindemittellösungen sind aufgrund ihrer besonderen Eigenschaften für die Herstellung der folgenden Anstrichstoffe besonders geeignet : Korrosionsschutzgrundierungen und Deckanstriche insbesondere für Stahl, Zink und Aluminium, Schutzfarben für Bitumen und teerhaltige Schichten, wie z. B. für Dachbeschichtungen, Straßenmarkierungsfarben, Schutzfarben, Putze und Imprägnierungslösungen für Mauerwerk und ähnliche mineralische Werkstoffe, sowie Schutzfarben für Kunststoffe und Holz.

Folgende Beispiele sollen den Gegenstand vorliegender Erfindung näher erläutern, ohne diesen einzuschränken.

Die in den Beispielen angegebenen Teile bzw. Prozente beziehen sich, wenn nicht anders gekennzeichnet, auf das Gewicht.

Beispiel 1

1.1 Herstellung des Copolymerisats

50 Teile Styrol, 40 Teile n-Butylacrylat und 10 Teile Acrylsäure werden vermischt. 20 Teile der so erhaltenen Monomerenmischung werden zusammen mit 10 Teilen Xylol vorgelegt und unter Stickstoff erwärmt. Bei 100 °C werden 0,2 Teile tert.-Butylperbenzoat, gelöst in 1 Teil Xylol, zugegeben. Nach 10 Minuten, wenn die Innentemperatur 100 °C erreicht hat, werden innerhalb von 2 Stunden die verbleibenden 80 Teile Monomerenmischung (Zulauf 1) und 1,8 Teile tert.-Butylperbenzoat, gelöst in 9 Teilen Xylol (Zulauf 2), innerhalb von 2,5 Stunden gleichmäßig zugegeben. Nach einstündigem Nachpolymerisieren bei 140 °C werden Xylol und die Restmonomeren im Vakuum abdestilliert. Das resultierende Copolymerisat ist in Tabelle 1 charakterisiert.

1.2 Herstellung eines Klarlacks

100 Teile des Polymerisats nach Beispiel 1.1 werden in 150 Teilen Isopropanol unter Erwärmen gelöst. Anschließend wird mit 9,5 Teilen 25 %iger wäßriger Ammoniaklösung neutralisiert und die resultierende Mischung mit 50 Teilen Wasser verdünnt.

Prüfungen des Klarlacks

1.2.1 Der so erhaltene Klarlack wird mit einer Kästchenrakel auf Glasplatten aufgebracht und 1 Stunde bei 23 °C und 50 % rF (= relativer Feuchte) getrocknet. Der angetrocknete Lackfilm weist eine Schichtdicke von 30 µm auf. Zur Beurteilung der Wasserfestigkeit wird dieser 1 Stunde bei 23 °C in Wasser gelagert.
1.2.2 In einem anderen Versuch werden die auf Glasplatten gerakelten Klarlackfilme 5 Tage bei 23 °C und 50 % rF getrocknet und der gleichen Prüfung unterworfen.
1.2.3 Zur Bestimmung des Wasseraufnahmevermögens wird der Klarlack gemäß Beispiel 1.2 auf Aluminiumfolie gerakelt (Trockenfilmdicke : 40 µm), 6 Tage bei 40 °C getrocknet und 2 Tage bei 23 °C in Wasser gelagert. Die abgetrocknete Folie wird anschließend ausgewogen und mit deren Gewicht vor der Wasserlagerung verglichen.

Die Ergebnisse der Prüfungen sind in Tabelle 2 dargestellt. Analog Beispiel 1.2 wurde ein Vergleichsbeispiel 1.2.1 durchgeführt, in dem bei sonst gleichen Bedingungen als Neutralisationsmittel das gebräuchliche Triethylamin verwendet wurde. Die Prüfungsergebnisse befinden sich ebenfalls in Tabelle 2.
Man erkennt die deutliche Überlegenheit der erfindungsgemäß mit Ammoniak erhaltenen wasserverdünnbaren Überzugs- und Imprägniermittel.
Zur Kontrolle der Wasserverdünnbarkeit wird der Klarlack auf 20 %ige Konzentration verdünnt und diese Lösung anschließend mit überschüssigem Wasser vermischt. Das Copolymerisat bleibt dabei immer klar gelöst.

1.3 Zur Herstellung einer schnelltrocknenden Glanzfarbe werden 300 Teile des Klarlacks 1.2 mit 50 Teilen Rutil abgerieben.

Die Farbe zeichnet sich neben hohem Glanz durch ausgezeichnete Haftfestigkeit auf Aluminium und verzinktem Stahl aus.

6

EP 0 044 399 B2

1.4 Eine Straßenmarkierungsfarbe wird aus 100 Teilen Copolymerisat 1.1 durch Lösen in 20 Teilen Butylglykol, 150 Teilen Isopropanol, 9,5 Teilen 25 %igem wäßrigem Ammoniak und 50 Teilen Wasser und anschließendes Pigmentieren mit 100 Teilen Rutil, 50 Teilen Microcalcit und 200 Teilen Kristobalitmehl und 40 Teilen einer 10 %igen Paste von Montmorillonit in Wasser hergestellt. Sie zeichnet sich durch kurze Trockenzeiten und gute Haltbarkeit im Verkehr aus.

1.5 Eine Masse zum Verputzen von Mauerwerk und ähnlichen mineralischen Untergründen wird hergestellt durch Vermengen einer Lösung aus 100 Teilen des Copolymerisats 1.1 in 50 Teilen Butylglykol, 9,5 Teilen 25 %igem wäßrigem Ammoniak, 10 Teilen eines mit Butanol vollständig veretherten flüssigen, lösungsmittelfreien Melamin-Formaldehydharzes als Weichmacher und 150 Teilen Wasser mit 100 Teilen Rutil, 40 Teilen Microcalcit, 500 Teilen grobem Calcit (0,06 bis 0,5 mm) und 100 Teilen einer 10 %igen Paste von Montmorillonit in Wasser.

Die Masse läßt sich dickschichtig auf mineralischen Putzfassaden und Mauerwerk aufspachteln, ist bereits nach kurzem Antrocknen wasserabweisend und bietet einen guten Schutz gegen Witterungseinflüsse.

1.6 Eine Fassadenfarbe wird aus einer Lösung von 100 Teilen Polymerisat 1.1 in 50 Teilen Butylglykol, 9,5 Teilen 25 %igem Ammoniak und 230 Teilen Wasser durch Abmischen mit 120 Teilen Rutil, 300 Teilen Dolomit und 40 Teilen einer 10 %igen Paste von Montmorillonit in Wasser erhalten.

Die Farbe ist nach kurzer Antrocknungsdauer wasserabweisend und eignet sich hervorragend zum Schutz von mineralischen Fassaden gegen Witterungeinflüsse und Eindringen von Schlagregen.

1.7 Eine Imprägniergrundierung für Mauerwerk und ähnliche saugende mineralische Untergründe wird durch Lösen von 100 Teilen Copolymerisat 1.1 in 400 Teilen Isopropanol, 9 Teilen 25 %igem Ammoniak und 400 Teilen Wasser hergestellt.

Die Lösung dringt schnell in saugende Untergründe ein. Die Grundierungen eignen sich ausgezeichnet zur Hydrophobierung und Verfestigung lockerer Untergründe und zur Haftvermittlung für nachfolgende herkömmliche Anstrichstoffe, wie z. B. lösungsmittelhaltige Farben oder Dispersionsfarben.

Beispiel 2

2.1 Herstellung des Copolymerisats :

Aus 51 Teilen Styrol, 41 Teilen Butylacrylat und 8 Teilen Acrylsäure wird nach dem Verfahren des Beispiels 1.1 ein Copolymerisat durch Substanzpolymerisation hergestellt.

Die Eigenschaften des Polymerisats sind in Tabelle 1 charakterisiert.

2.2 Das Copolymerisat 2.1 wird wie im Beispiel 1.2 gelöst, wobei mit 25 %igem Ammoniak auf pH 8,8 eingestellt wird.

Der erhaltene Klarlack wird wie in den Beispielen 1.3.1 bis 1.3.3 geprüft. Die Ergebnisse sind in Tabelle 2 aufgeführt. Er läßt sich ohne Bindemittelflockung beliebig mit Wasser zu klaren Lösungen verdünnen.

Ein Klarlack aus 150 Teilen einer 66,6 %igen Lösung des Copolymerisats 2.1 in Butylglykol, mit 25 %igem Ammoniak und 300 Teilen Wasser auf pH 8,6 eingestellt, läßt sich ebenfalls mit überschüssigem Wasser ohne sichtbare Bindemittelflockung nachverdünnen.

2.3 Eine Glanzfarbe für Korrosionsschutzdeckanstriche wird durch Lösen von 100 Teilen Copolymerisat 2.1 in 20 Teilen Butylglykol, 30 Teilen Butanol und 100 Teilen Isopropanol, 7,8 Teilen 25 %igem Ammoniak und 50 Teilen Wasser und anschließendes Pigmentieren mit 90 Teilen Rutil und 4 Teilen Phthalocyanin-Blau hergestellt.

Diese Korrosionsschutzfarbe bietet bereits, ohne Mitverwendung von aktiven Rostschutzpigmenten, einen hervorragenden Schutz für Metalle gegen Korrosion, wie z. B. eine vergleichende Korrosionsprüfung bei einer Trockenfilmdicke von 40 μm auf Tiefziehblech im Salzsprühtest nach DIN 50 021 zeigt.

Nach 300 h Salzsprühbeanspruchung ist keine Unterrostung unter dem Anstrich und am Schnitt erkennbar.

Ein Anstrich des Beispiels 2.3 zeichnet sich weiterhin durch hohe Filmhärte und gute Filmdehnbarkeit im Erichsen-Tiefungsgerät aus sowie durch hohen Glanz.

Der Anstrich ist nach Durchtrocknung sehr haftfest auf Metallen, wie Stahl, Zink und Aluminium, auf vielen Kunststoffen, wie PVC, Polystyrol, Polymethylmethacrylat und verschiedenartigen Anstrichuntergründen sowie bituminösen Werkstoffen.

Die Glanzfarbe 2.3 mit Chromoxidgrün anstelle von Phthalocyaninblau eignet sich ausgezeichnet als Schutzanstrich für bitumenhaltige Beläge gegen Verwitterung und übermäßige Erwärmung bei Sonneneinstrahlung, z. B. als Flachdachanstrich, aufgrund seiner hohen Wasserresistenz, seiner guten Haftfestigkeit und der Beständigkeit gegen Durchbluten von dunklen Teerinhaltsstoffen beim Aufbringen der Farbe.

7

## Beispiel 3

Aus 64 Teilen Styrol, 24 Teilen Butylacrylat und 12 Teilen Acrylsäure wird analog zu Beispiel 1.1 ein Substanzpolymerisat hergestellt. Seine Kennwerte sind in Tabelle 1 angegeben.

Dieses Copolymerisat löst sich klar in 33 %iger Konzentration in einer Mischung von Isopropanol/Wasser = 3/1 oder Butylglykol/Wasser = 1/3 unter Neutralisation auf einen pH-Wert von 8,0 bis 8,8. Die Lösungen lassen sich mit Wasser ohne Bindemittelausfällung, Zwei-Phasenbildung oder Entstehen einer milchigen Trübung mit hohen Anteilen Wasser verdünnen. Die an- und durchgetrockneten Lackfilme zeichnen sich durch hohe Hydrophobie aus.

## Beispiel 4

4.1 35 Teile Styrol, 15 Teile Methylmethacrylat, 44 Teile Isobutylacrylat und 6 Teile Acrylsäure werden analog Beispiel 1.1 polymerisiert. Das Polymerisat ist durch die Kennwerte in Tabelle 1 charakterisiert. Es läßt sich, wie das Copolymerisat aus Beispiel 2.1 in Beispiel 2.2 beschrieben, lösen und mit Wasser verdünnen.

4.2 400 Teile eines Weißlacks a) aus 100 Teilen Copolymer 4.1, gelöst in 100 Teilen Butylglykol, 150 Teilen Wasser unter Neutralisation mit 25 %igem Ammoniak auf pH 9,0 und pigmentiert mit 50 Teilen Rutil werden mit 400 Teilen einer herkömmlichen Dispersionsfarbe b) auf der Basis eines ähnlich zusammengesetzten Copolymerisats, wie es unter der Handelsbezeichnung °Acronal 290 D im Handel ist und gleichem Pigment und Bindemittelgehalt abgemischt.

Die Kombination aus a) und b) ergibt nach Durchtrocknung an der Luft Anstriche, die sich gegenüber dem in gleicher Trockenschichtdicke hergestellten Anstrich aus b) allein durch erhöhten Glanz, höhere Filmhärte, bessere Haftfestigkeit auf Metallen, geringere Wasseraufnahme und Wasserdampfdurchlässigkeit sowie verbesserten Korrosionsschutz im Salzsprühtest auszeichnen.

## Beispiel 5

Analog zu Beispiel 1 werden Substanzpolymerisate der folgenden Zusammensetzung hergestellt :
5.1 60 Teile Styrol, 34 Teile Butylacrylat und 6 Teile Acrylsäure
5.2 60 Teile Styrol, 30 Teile Ethylhexylacrylat und 10 Teile Methacrylsäure

Die Kennwerte sind in Tabelle 1 mit aufgeführt. Die beiden Harze sind nicht mehr wie in den vorausgehenden Beispielen 33 %ig in Isopropanol/Wasser = 3/1 bzw. Butylglykol/Wasser = 1/3 nach Neutralisation mit Ammoniak auf pH 9 löslich.

Sie benötigen verhältnismäßig hohe Anteile Butylglykol bzw. Mischungen von Butylglykol mit Isopropanol, wie z. B. deren Mischung im Mengenverhältnis 1 : 2, damit ihre Lösungen noch mit Wasser verdünnbar bleiben und bei Raumtemperatur noch Filmbildung stattfindet.

## Tabelle 1

Kennwerte der Copolymerisate

|  | Beispiel Nr. | | | | | |
|  | 1.1 | 2.1 | 3.1 | 4.1 | 5.1 | 5.2 |
|---|---|---|---|---|---|---|
| Gehalt E % [COO-Gruppen]*) | 13,8 | 14,2 | 8,3 | 18,7 | 11,7 | 5,7 |
| SZ (mg KOH/g) | 75 | 62 | 91 | 47 | 47 | 63 |
| Konstante A | 209 | 202 | 209 | 197 | 186 | 189 |
| Erweichungspunkt (°C) DIN 53 180 | 98 | 95 | 115 | 100 | 104 | 105 |
| K-Wert (3%ig, Aceton) | 27 | 29 | 26 | 31 | 28 | 20 |

*) Die angegebenen Werte sind bereits mit den Faktoren für Ester von in α-Stellung bzw. β-Stellung verzweigten Alkoholen korrigiert.

EP 0 044 399 B2

Tabelle 2

Prüfergebnisse gemäß Prüfungen 1.3

| Beispiel | Wasserfestigkeit nach 1 h | Wasserfestigkeit nach 3 d | Wasseraufnahme in Gew.-% |
|---|---|---|---|
| 1.2 | Film schwach erweicht | Film unverändert | 1,8% |
| 2.2 | Film schwach erweicht | Film unverändert | 1,2% |
| 3.2 | Film schwach erweicht | Film unverändert | 1,5% |
| 4.2 | Film schwach erweicht | Film unverändert | 1,3% |
| Vergleichsbeispiel 1.2.1 | Film stark aufgequollen | Film schwach erweicht | 33% |

**Patentansprüche**

1. Wasserverdünnbare Bindemittellösung, erhältlich durch Lösen eines carboxylgruppenhaltigen Copolymerisates in mit Wasser zumindest teilweise mischbarem organischen Lösungsmittel und zumindest teilweiser Neutralisation mit Ammoniak, wobei das Copolymerisat im wesentlichen aus

a) 31 bis 64 Gew.% mindestens eines Vinylaromaten,

b) 24 bis 65 Gew.% mindestens eines carboxylgruppenfreien Esters einer α,β-ethylenisch ungesättigten, 3 bis 5 Kohlenstoffatome enthaltenden Mono- oder Dicarbonsäure mit einem 1 bis 14 Kohlenstoffatome enthaltenden verzweigten oder geradkettigen Monoalkanol.

c) 4 bis 30 Gew.% mindestens einer carboxylgruppenhaltigen α-β-ethylenisch ungesättigten Verbindung mit 3 bis 14 Kohlenstoffatomen und

d) 0 bis 5 Gew.% weiterer, unter a) bis c) nicht genannter α-β-ethylenisch ungesättigter Verbindungen,

besteht mit der Maßgabe, daß die Summe der unter a) bis d) genannten Prozentzahlen gleich 100 ist und daß das Copolymerisat einen K-Wert (nach Fikentscher) von 18 bis 60 aufweist und die Komponenten a), b), c) und d) in einem solchen Verhältnis einpolymerisiert enthält, daß das Copolymerisat der Formel

$$100 \cdot \log SZ + 1{,}6 \cdot E = A$$

entspricht, wobei A für eine Zahl zwischen 180 und 220 steht, SZ die Säurezahl in mg KOH/g Copolymerisat und E den Anteil an Estergruppen in Gew.% im Copolymerisat bedeuten, wobei E für Ester (b) der in α-Stellung verzweigten Alkanole mit dem Faktor 0,7 bzw. für Ester (b) der in β-Stellung verzweigten Alkanole mit dem Faktor 0,8 zu multiplizieren ist.

2. Wasserverdünnbare Bindemittellösung nach Anspruch 1, erhältlich unter Verwendung eines Copolymerisates, dessen Kennzahl A für eine Zahl zwischen 190 und 210 steht.

3. Wasserverdünnbare Bindemittellösung nach Anspruch 1 oder 2, erhältlich unter Verwendung eines Copolymerisates, dessen Kennzahl A für eine Zahl zwischen 195 und 205 steht.

4. Wasserverdünnbare Bindemittellösung nach einem der Ansprüche 1 bis 3, erhältlich unter Verwendung eines Copolymerisates mit einem Erweichungspunkt nach DIN 53180 von 55 bis 160 °C.

5. Verwendung der wasserverdünnbaren Bindemittellösung gemäß einem der Ansprüche 1 bis 4 zur Herstellung von wasserverdünnbaren, physikalisch trocknenden Zusammensetzungen.

6. Verwendung der wasserverdünnbaren Bindemittellösung gemäß einem der Ansprüche 1 bis 4, gegebenenfalls in Abmischung mit Anstrichdispersionen für Anstrichmittel und/oder Imprägniermittel.

**Claims**

1. A water-dilutable binder solution obtainable by dissolving a carboxyl-containing copolymer in an organic solvent which is at least partially miscible with water and by at least partially neutralizing the solution with ammonia, wherein the copolymer essentially consists of

a) from 31 to 64 % by weight of one or more vinylaromatics,

b) from 24 to 65 % by weight of one or more esters, free from carboxyl groups, of an α,β-ethylenically unsaturated monocarboxylic acid or dicarboxylic acid, of 3 to 5 carbon atoms, with a branched or straight-chain monoalkanol of 1 to 14 carbon atoms,

c) from 4 to 30 % by weight of one or more α,β-ethylenically unsaturated compounds, containing carboxyl groups, of 3 to 14 carbon atoms, and

9

d) from 0 to 5 % by weight of other $\alpha,\beta$-ethylenically unsaturated compounds, not mentioned under a) to c),

with the proviso that the sum of the percentages mentioned under a) to d) is 100 and that the copolymer has a K value, determined by the Fikentscher method, of from 18 to 60 and contains components a), b), c) and d) as polymerized units in a ratio such that the copolymer conforms to the equation

$$100 \cdot \log SZ + 1.6 \cdot E = A$$

where A is a number from 180 to 220, SZ is the acid number in mg of KOH/g of copolymer and E is the content of ester groups, in % by weight, in the copolymer, E having to be multiplied by a factor of 0.7 for esters (b) of $\alpha$-branched alkanols and by a factor of 0.8 for esters (b) of $\beta$-branched alkanols.

2. A water-dilutable binder solution as claimed in claim 1, obtainable using a copolymer whose parameter A is a number from 190 to 210.

3. A water-dilutable binder solution as claimed in claim 1 or 2, obtainable using a copolymer whose parameter A is a number from 195 to 205.

4. A water-dilutable binder solution as claimed in any of claims 1 to 3, obtainable using a copolymer having a German Standard Specification DIN 53,180 softening point of from 55 to 160 °C.

5. Use of a water-dilutable binder solution as claimed in any of claims 1 to 4 for preparing a water-dilutable, physically drying composition.

6. Use of a water-dilutable binder solution as claimed in any one of claims 1 to 4, solo or admixed with a paint dispersion, as a coating and/or impregnating agent.


**Revendications**

1. Solution de liant diluable dans l'eau, obtenue par dissolution d'un copolymérisat à groupes carboxyle dans un solvant organique miscible au moins partiellement avec l'eau et neutralisation au moins partielle avec de l'ammoniac, le copolymérisat consistant essentiellement en :

a) 31 à 64 % en poids d'au moins un aromate vinylique

b) 24 à 65 % en poids d'au moins un ester, sans groupe carboxyle, d'un acide mono- ou dicarboxylique ayant 3 à 5 atomes de carbone, insaturé éthyléniquement en $\alpha$, $\beta$ et d'un monoalcanol ramifié ou à chaîne droite, ayant 1 à 14 atomes de carbone.

c) 4 à 30 % en poids d'au moins un composé à 3 à 14 atomes de carbone, insaturé éthyléniquement en $\alpha$, $\beta$ et contenant des groupes carboxyle, et

d) 0 à 5 % en poids d'autres composés éthyléniquement insaturés en $\alpha$, $\beta$, non indiqués sous a) à c), sous réserve que la somme des pourcentages indiqués sous a) à d) soit égale à 100, et que le copolymérisat possède un indice K (selon Fikentscher) de 18 à 60 et contient, en polymérisation, les composants a), b), c) et d), dans des proportions telles qu'au polymérisat correspondant un indice A compris entre 180 et 220, l'indice A étant calculé à partir de l'égalité suivante :

$$A = 100 \cdot \log SZ + 1,6 \cdot E$$

SZ représentant l'indice d'acide en mg KOH/g de copolymérisat et E étant le pourcentage en poids de groupes ester dans le copolymérisat, E étant multiplié par le facteur 0,7 pour les esters (b) des alcanols ramifiés en position $\alpha$ et par le facteur 0,8 pour les esters (b) des alcanols ramifiés en position $\beta$.

2. Solution de liant diluable dans l'eau selon la revendication 1 obtenue en utilisant un copolymérisat dont la caractéristique A représente un nombre compris entre 190 et 210.

3. Solution de liant diluable dans l'eau selon la revendication 1 ou 2 obtenue en utilisant un copolymérisat dont la caractéristique A représente un nombre compris entre 195 et 205.

4. Solution de liant diluable dans l'eau selon l'une des revendications 1 à 3 obtenue en utilisant un copolymérisat ayant un point de ramollissement, selon DIN 53 180, de 55 à 160 °C.

5. Utilisation d'une solution de liant diluable dans l'eau selon l'une des revendications 1 à 4 pour la fabrication de compositions séchant physiquement et diluables dans l'eau.

6. Utilisation d'une solution de liant diluable dans l'eau selon l'une des revendications 1 à 4 éventuellement en mélange avec des dispersions d'enduction, pour enduits et/ou agents d'imprégnation.